# EUROPEAN PATENT SPECIFICATION

(11) **EP 1 215 094 B1**
(45) Date of publication and mention of the grant of the patent: **15.02.2006**
(21) Application number: 01000704.5
(22) Date of filing: 04.12.2001
(51) Int. Cl.: B60S 1/04, B60S 1/34

(54) **A wiper pivot for a motor vehicle**
Wischerlagerung für ein Kraftfahrzeug
Pivot d'essuie-glace pour véhicule

(30) Priority: 14.12.2000 US 736756
(43) Date of publication of application: 19.06.2002
(73) Proprietor: Ford Global Technologies, LLC, Dearborn, MI 48126 (US)
(72) Inventor: Perin, Giovanni, Rochester Hills, MI 48309 (US); Schuster, Peter John, Dearborn, MI 48124-4281 (US)
(74) Representative: Messulam, Alec Moses

(56) References cited:
- DE-A- 19 903 140
- GB-A- 1 201 291

## Description

This invention relates to motor vehicles and in particular to a wiper pivot for a windscreen wiper assembly of a motor vehicle.

Pedestrian safety is a concern of automobile manufacturers and manufacturers strive to minimize pedestrian injuries in vehicle collisions by making a variety of modifications to vehicles. Efforts include making vehicles more visible with brighter colours, anti-lock brakes which allow the driver to swerve and avoid contact with a pedestrian. Devices such as air bags and spoilers which deploy from the vehicle to prevent pedestrian impact, and softer fronts on vehicles to reduce the level of head and leg injury have therefore been developed.

According to statistics, head injuries are the major cause of death in pedestrian-vehicle collisions.

In order to alleviate the pedestrian injuries due to impact with a vehicle, softer fronts on vehicles have been implemented from the bumper to the hood and to the wiper pivots. For example, vehicle packaging is modified to create greater clearance between the hood, engine, and suspension.

However, a vehicle generally includes specific hard points such as the hood hinges and the wiper pivots which can cause severe injury to a pedestrian's head upon impact.

Generally, the wiper pivots are solid metal appendages below a vehicle windshield which serve as mounting points for wiper arms. The wiper pivots are generally affixed to the cowl of a vehicle.

In order to avoid wiper pivot injuries it is known to provide a wiper pivot which slides into the cowl of a vehicle. The wiper pivot of the prior art is mounted on a spring-loaded clip below the cowl of the vehicle. The spring-loaded mounting allows the wiper pivot to slide into the cowl when it is subjected to an impact. The wiper pivot of the prior art slides in the cowl and is susceptible to defects due to debris or corrosion lodged between the pivot and the cowl. Furthermore, the wiper pivot of the prior art creates additional vehicle packaging issues as the device requires ample space below the cowl to allow the pivot to slide.

DE19903140 discloses a wiper pivot with a rigid pivot that can retract below vehicle bodywork and GB1201291 describes a wiper pivot with a rigid but hollow shaft accommodating a flexible tube for windshield washer fluid.

It is an object of this invention to provide a compact and durable wiper pivot which reduces the chances for injury to a pedestrian by absorbing energy from a pedestrian impact.

According to a first aspect of the invention there is provided a collapsible windshield wiper pivot for preventing pedestrian injury upon impacting a vehicle, the collapsible windshield wiper pivot comprising a pivot base adapted to be driven by a windshield wiper motor, the pivot base being disposed in a vehicle cowl, a hollow sleeve having a first end mounted on the pivot base, a middle section adapted to crush outwardly and vertically when subjected to a pedestrian impact, and a second end, and a cap mounted on the second end of the hollow sleeve, the cap having a surface adapted to mate with a base of a wiper arm, whereby the cap is adapted to be vertically displaced and the hollow sleeve to crush outwardly and vertically at the middle section when subjected to a pedestrian impact, the windshield wiper pivot characterised in that the middle section (24) includes a flared section (25) predisposed to crush outwardly and vertically when subjected to an impact.

The surface of the cap may have a plurality of grooves formed thereon to affix the wiper arm to the windshield wiper pivot.

The middle section may include at least one indentation in a radially outwardly direction which facilitates the middle section to crush outwardly and vertically when subjected to an impact.

The middle section of the hollow sleeve may also include a number of longitudinally extending apertures to assist the middle section to crush outwardly and vertically when subjected to an impact.

The cap, the hollow sleeve and the pivot base may be joined by welding.

The cap may include a threaded shaft for receiving the wiper arm and a nut.

The wall thickness of the hollow section may be between 0.6 mm and 2.0 mm.

According to a second aspect of the invention there is provided a motor vehicle having a collapsible windshield wiper pivot in accordance with said first aspect of the invention.

The invention will now be described by way of example with reference to the accompanying drawing of which:-
FIGURE 1a is a perspective view of the present invention illustrated in operational relationship with a motor vehicle;
FIGURE 1b is an enlarged plan view of the present invention installed on the cowl of a motor vehicle without the windshield wiper arms attached;
FIGURE 2 is an enlarged schematic cross-sectional view of a crushable windshield wiper pivot according to the invention along lines 2-2 in Figure 1;
FIGURE 3 is view similar to that of Fig. 2 but showing the crushable windshield wiper pivot after pedestrian impact;
FIGURE 4 is a front view of the crushable wiper pivot shown in Fig. 2 before a pedestrian impact;
FIGURE 5 is a schematic cross-sectional plan view of the base of the wiper arm, cap and the sleeve after a pedestrian impact, taken along line 5-5 of Figure 3;
FIGURE 6 is an enlarged schematic front view of a cap in accordance with the present invention; and
FIGURE 7 is a schematic plan view of the base of a wiper arm, cap, and sleeve in accordance with the invention before a pedestrian impact.

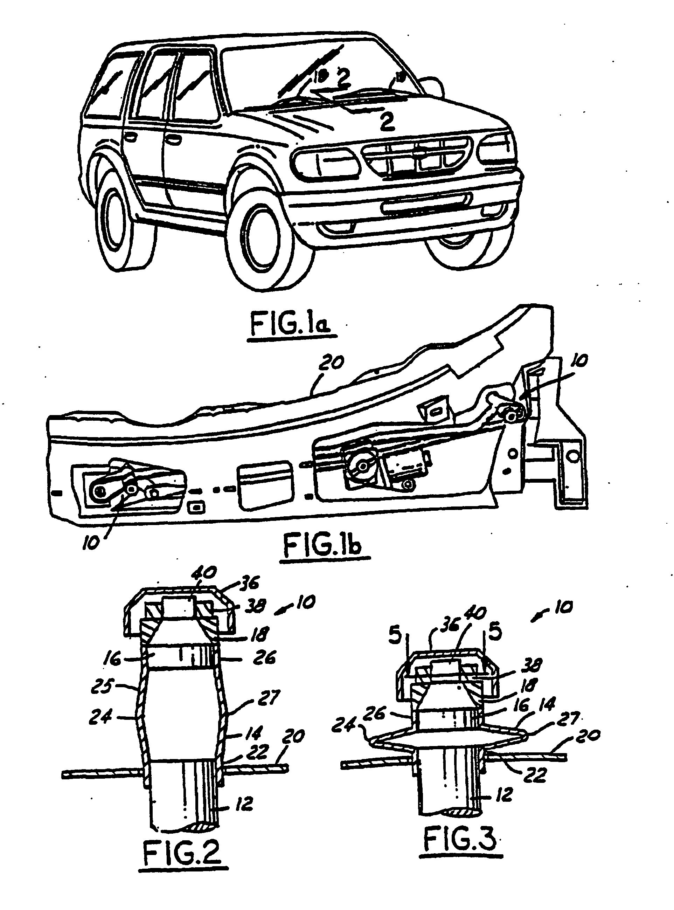

With reference to Figure 1a, the present invention 10 is shown as installed on a motor vehicle with the windshield wiper arms attached. The wiper pivots serve as mounting points for the wiper arms as shown in Figure 1a.

Referring now to Figure 1b, an enlarged plan view of the present invention 10 is shown as installed on the cowl of a motor vehicle without the windshield wiper arms attached. The wiper pivots 10 are affixed to the cowl 20 and protrude from the cowl 20 of the vehicle.

Referring now to Figure 2, a schematic cross-sectional view of the present invention 10 is shown. The crushable wiper pivot 10 includes a pivot base 12, a hollow sleeve 14, and a cap 16. The pivot base 12 is driven in a conventional manner by a windshield wiper motor (not shown) which is operable to reciprocate the windshield wiper arm 18 and its components across the windshield.

The pivot base 12 is disposed partially below the line of the vehicle cowl 20. The hollow sleeve 14 includes a first end 22 mounted on the pivot base 12, a middle section 24 adaptable to crush outwardly and vertically, and a second end 26. The sleeve 14 preferably but not necessarily has a thickness in the approximate range of 0.6 mm to 2.0 mm.

The cap 16 of the present invention 10 is mounted on the second end 26 of the sleeve 14 and is a solid member that is press-fitted and/or welded into the sleeve 14.

The cap 16 has a grooved surface 32 and a threaded shaft 40 adaptable to mate with a base 18 of a wiper arm 18 and the sleeve 14. The cap also has a smooth surface adaptable to fit along the inner portion of the sleeve 14.

A nut 38 is threaded onto the shaft 40 of the cap 16 and further secures the wiper arm 18 onto the cap 16.

As shown in Figure 3, upon impact, the cap 16, wiper arm 18 and nut 38 are vertically displaced and the hollow sleeve 14 crushes outwardly and vertically in the downward direction at the middle section 24 when subjected to a pedestrian impact. By crushing the wiper pivot 10 in a pedestrian impact and absorbing energy, injury to the pedestrian is reduced.

It should also be appreciated that the cap 16, the sleeve 14 and the pivot base 12 may be formed of one component or two components instead of three separate components welded together.

With reference to Figures 2 and 3, the middle section 24 of the sleeve 14 includes a flared section 25 which is predisposed to crush outwardly and vertically when subjected to an impact.

The flared section 25 preferably, but not necessarily, is configured as shown in Figure 2 where the middle section 24 includes an indentation 27 in a radially outward direction. This configuration allows the middle section to crush outwardly and vertically as the windshield wiper pivot is subjected to an impact as shown in Figure 3.

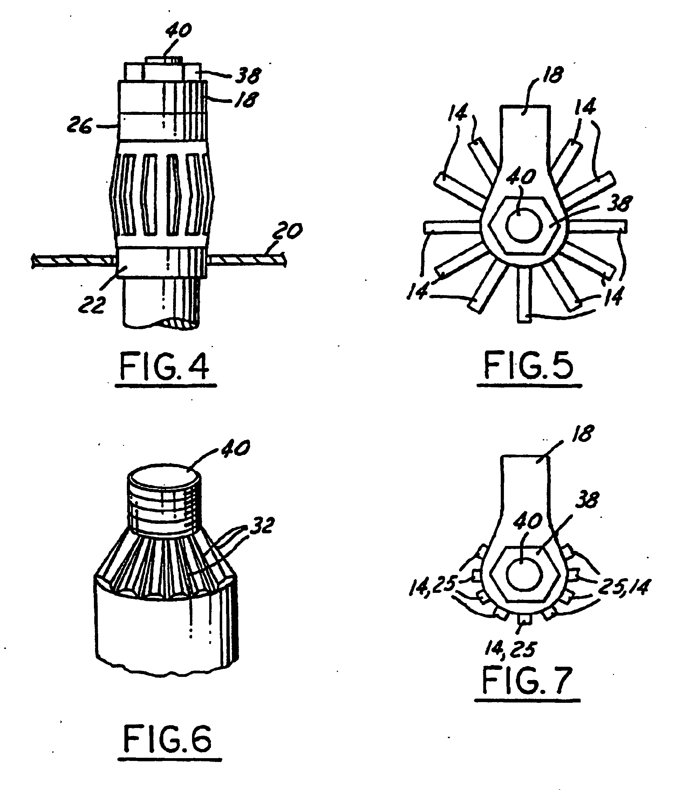

Referring now to Figure 4, the sleeve 14 also includes longitudinally extending apertures or slits in the middle section 24. The slits or apertures in conjunction with the flared section 25 of the sleeve 14 further predispose ,by weakening, the sleeve 14 to crush outwardly and vertically when subjected to a pedestrian impact as shown in Figure 5.

With reference to Figures 2, 3, 6, and 7, in order to ensure that the windshield wiper arm 18 is securely fixed to the windshield wiper pivot 10 the sleeve 14 is fitted at the second end 26 with a cap 16.

The surface 30 of the cap 16 is formed with a plurality of grooves 32 to affix the base of the wiper arm 18 to the pivot. As indicated above, a nut is further provided on the threaded section 40 of the cap to secure the wiper arm 18 on the pivot 10. The cap 16 is mounted to the sleeve 14 as a press-fitted component or may be welded to the sleeve 14.

Also referring to both Figures 2 and 3, the arm head cover 36 of the present invention may be designed so that the wiper pivot 34 only extends into the arm head cover 36 to only enclose the cap 16, wiper arm 18 and nut 38 in arm head cover 36. The arm head cover 36 of a preferred embodiment is pivotally attached to the wiper arm 18 and may be pivoted upward to reveal the wiper pivot 10.

By decreasing the depth to which the wiper pivot 10 sits in the arm head cover 36, the wiper pivot 10 is able to crush outwardly and vertically upon impact without being limited by the arm head cover 36.

The windshield wiper pivots 10 or the windshield wiper system as a whole may be formed of material such as steel, Aluminium or Magnesium. However, it is preferable to use one type of material to prevent galvanic corrosion between the wiper components.

## Claims

1. A collapsible windshield wiper pivot (10) for preventing pedestrian injury upon impacting a vehicle wherein the collapsible windshield wiper pivot (10) comprises a pivot base (12) adapted to be driven by a windshield wiper motor, the pivot base (12) being disposed in a vehicle cowl, a hollow sleeve (14) having a first end (22) mounted on the pivot base (12), a middle section (24) adapted to crush outwardly and vertically when subjected to an impact, and a second end (26), and a cap (16) mounted on the second end (26) of the hollow sleeve (14), the cap (16) having a surface (32) adapted to mate with a base of a wiper arm (18), whereby the cap (16) is adapted to be vertically displaced and the hollow sleeve (14) to crush outwardly and vertically at the middle section (24) when subjected to an impact, the windshield wiper pivot **characterised in that** the middle section (24) includes a flared section (25) pre-disposed to crush outwardly and vertically when subjected to an impact.

2. A pivot as claimed in claim 1, wherein the surface of the cap (16) has a plurality of grooves (32) formed thereon to affix the wiper arm (18) to the windshield wiper pivot (10).

3. A pivot as claimed in claim 1 or claim 2, wherein the middle section (24) includes at least one indentation (27) in a radially outwardly direction which facilitates the middle section (24) to crush outwardly and vertically when subjected to an impact.

4. A pivot as claimed in any of claims 1 to 3, wherein the middle section (24) of the hollow sleeve (14) includes a number of longitudinally extending apertures to assist the middle section to crush outwardly and vertically when subjected to an impact.

5. A pivot as claimed in any of claims 1 to 4, wherein the cap (16), the hollow sleeve (14) and the pivot base (12) are joined by welding.

6. A pivot as claimed in any of claims 1 to 5, wherein the cap (16) includes a threaded shaft (40) for receiving the wiper arm (18) and a nut (38).

7. A pivot as claimed in any of claims 1 to 5, wherein the wall thickness of the hollow sleeve (14) is between 0.6mm and 2.0mm.

8. A motor vehicle having a collapsible windshield wiper pivot as claimed in any of claims 1 to 7.

## Patentansprüche

1. Zusammenstauchbarer Windschutzscheibenwischer-Drehzapfen (10) zur Vermeidung von Verletzungen eines Fußgängers bei einem Aufprall auf ein Fahrzeug, worin der zusammenstauchbare Scheibenwischer-Drehzapfen (10) eine Drehzapfenbasis (12) aufweist, welche ausgelegt ist, von einem Scheibenwischermotor angetrieben zu werden, wobei die Drehzapfenbasis (12) in einer Fahrzeugverkleidung angeordnet ist, und eine hohle Hülse (14) mit einem an der Drehzapfenbasis (12) angebrachten ersten Ende (22), einem Mittelabschnitt (24), welcher ausgelegt ist, vertikal und nach außen zusammengestaucht zu werden, wenn er einem Aufprall unterliegt, und mit einem zweiten Ende (26), und einen am zweiten Ende (26) der hohlen Hülse (14) angebrachten Kopf oder Hut (16), wobei der Kopf oder Hut (16) eine Oberfläche (32) hat, welche ausgelegt ist, sich passend in ein Fußstück eines Wischerarmes (18) einzufügen, so daß der Kopf oder Hut (16) ausgelegt ist, vertikal auszuweichen, und die hohle Hülse (14) ausgelegt ist, sich im mittleren Bereich (24) vertikal und nach außen zusammenstauchen zu lassen, wenn sie einem Aufprall unterliegt,
wobei der Windschutzscheibenwischer-Drehzapfen **dadurch gekennzeichnet ist, daß** der mittlere Abschnitt (24) einen nach außen aufgespreizter Abschnitt (25) ist oder beinhaltet, der dafür vorbereitet ist, sich vertikal und nach außen zusammenstauchen zu lassen, wenn er einem Aufprall unterliegt.

2. Drehzapfen nach Anspruch 1, worin die Oberfläche des Kopfes (16) mehrere darin eingeformte Nuten (32) hat, um den Wischerarm (18) am Scheibenwischer-Drehzapfen (10) zu fixieren.

3. Drehzapfen nach Anspruch 1 oder Anspruch 2, worin der mittlere Abschnitt (24) wenigstens eine Knickstelle (27) in einer radial nach außen weisenden Richtung aufweist, welche ein vertikales und nach außen gerichtetes Zusammenstauchen des mittleren Abschnittes (24) erleichtert, wenn er einem Aufprall unterliegt.

4. Drehzapfen nach einem beliebigen der Ansprüche 1 bis 3, worin der mittlere Abschnitt (24) der hohlen Hülse (14) eine Reihe sich längs erstreckender Öffnungen aufweist, welche ein vertikales und nach außen gerichtetes Zusammenstauchen des mittleren Abschnittes erleichtern, wenn er einem Aufprall unterliegt.

5. Drehzapfen nach einem beliebigen der Ansprüche 1 bis 4, worin der Kopf oder Hut (16), die hohle Hülse (14) und die Drehzapfenbasis (12) miteinander verschweißt sind.

6. Drehzapfen nach einem beliebigen der Ansprüche 1 bis 5, worin der Kopf oder Hut (16) einen Gewindestutzen (40) zur Aufnahme des Wischerarmes (18) und einer Mutter (38) aufweist.

7. Drehzapfen nach einem beliebigen der Ansprüche 1 bis 5, worin die Wandstärke der hohlen Hülse (14) zwischen 0,6 mm und 2,0 mm beträgt.

8. Kraftfahrzeug mit einem zusammenstauchbaren Windschutzscheibenwischer-Drehzapfen nach einem beliebigen der Ansprüche 1 bis 7.

## Revendications

1. Un pivot d'essuie-glace pliable (10) pour prévenir les blessures causées aux piétons lorsqu'ils impactent un véhicule, le pivot d'essuie-glace pliable (10) comprenant une base de pivot (12) adaptée pour entraînement par un moteur d'essuie-glace, la base de pivot (12) étant disposée dans un carénage de véhicule, une gaine creuse (14) possédant une première extrémité (22) montée sur la base de pivot, une section médiane (24) adaptée pour s'écraser vers l'extérieur et verticalement lorsqu'elle est soumise à un impact, et une deuxième extrémité (26), et un bouchon ou chapeau (16) monté sur la deuxième extrémité (26) de la gaine creuse (14), le bouchon ou chapeau (16) possédant une surface (32) adaptée pour s'accoupler avec une base d'un bras d'essuie-glace (18), le bouchon ou chapeau (16) étant adapté pour se déplacer verticalement et la gaine creuse (14) pour s'écraser vers l'extérieur et verticalement au niveau de la section médiane (24) lorsqu'il sont soumis à un impact, le pivot d'essuie-glace étant **caractérisé en ce que** la section médiane (24) comprend ou est constituée par une section évasée (25) prédisposée pour s'écraser vers l'extérieur et verticalement lorsqu'elle est soumise à un impact.

2. Un pivot selon la revendication 1, dans lequel la surface du bouchon (16) comprend plusieurs rainures (32) qui sont formées pour fixer le bras d'essuie-glace (18) au pivot d'essuie-glace (10).

3. Un pivot selon la revendication 1 ou la revendication 2, dans lequel la section médiane (24) comprend au moins une indentation (27) ayant une direction radiale extérieure, qui assiste la section médiane à s'écraser vers l'extérieur et verticalement lorsqu'elle est soumise à un impact.

4. Un pivot selon l'une quelconque des revendications 1 à 3, dans lequel la section médiane (24) de la gaine creuse (14) comprend un nombre d'ouvertures en extension longitudinale pour assister la section médiane à s'écraser vers l'extérieur et verticalement lorsqu'elle est soumise à un impact.

5. Un pivot selon l'une quelconque des revendications 1 à 4, dans lequel le bouchon ou chapeau (16), la gaine creuse (14) et la base de pivot (12) sont joints par soudage.

6. Un pivot selon l'une quelconque des revendications 1 à 5, dans lequel le bouchon ou chapeau (16) comprend un arbre fileté (40) pour recevoir le bras d'essuie-glace (18) et un boulon ou écrou (38).

7. Un pivot selon l'une quelconque des revendications 1 à 5, dans lequel l'épaisseur de la paroi de la gaine creuse (14) est comprise entre 0,6 mm et 2,0 mm.

8. Un véhicule comprenant un pivot d'essuie-glace pliant selon l'une quelconque des revendications 1 à 7,
